(19) Europäisches Patentamt / European Patent Office / Office européen des brevets

(11) **EP 4 269 341 A1**

(12) **EUROPEAN PATENT APPLICATION**
published in accordance with Art. 153(4) EPC

(43) Date of publication:
**01.11.2023 Bulletin 2023/44**

(21) Application number: **21911310.7**

(22) Date of filing: **03.12.2021**

(51) International Patent Classification (IPC):
*C01B 33/18* (2006.01)    *H01M 4/36* (2006.01)
*H01M 4/38* (2006.01)    *H01M 4/62* (2006.01)
*H01M 4/587* (2010.01)    *H01M 10/052* (2010.01)

(52) Cooperative Patent Classification (CPC):
**C01B 33/18; H01M 4/36; H01M 4/38; H01M 4/587;
H01M 4/62; H01M 10/052;** Y02E 60/10

(86) International application number:
**PCT/KR2021/018267**

(87) International publication number:
**WO 2022/139243 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020 KR 20200182257**

(71) Applicant: **Daejoo Electronic Materials Co., Ltd.
Siheung-si, Gyeonggi-do 15094 (KR)**

(72) Inventors:
• **JEON, Young Min
Siheung-si, Gyeonggi-do 15094 (KR)**

• **PARK, Jeong Gyu
Siheung-si, Gyeonggi-do 15094 (KR)**
• **LEE, Hyun Seok
Siheung-si, Gyeonggi-do 15094 (KR)**
• **LIM, Sung Woo
Siheung-si, Gyeonggi-do 15094 (KR)**
• **NAM, Sang Jin
Siheung-si, Gyeonggi-do 15094 (KR)**
• **LIM, Jong Chan
Siheung-si, Gyeonggi-do 15094 (KR)**
• **LEE, Jung Hyun
Siheung-si, Gyeonggi-do 15094 (KR)**

(74) Representative: **HGF
HGF Limited
1 City Walk
Leeds LS11 9DX (GB)**

(54) **POROUS SILICON STRUCTURE, POROUS SILICON-CARBON COMPOSITE COMPRISING SAME, AND NEGATIVE ELECTRODE ACTIVE MATERIAL**

(57) An embodiment of the present invention relates to a porous silicon structure, a porous silicon-carbon composite comprising same, and a negative electrode active material. The porous silicon structure and the porous silicon-carbon composite each have a molar ratio (O/Si) of oxygen (O) atoms to silicon (Si) atoms that satisfies a specific range, and thus, when applied to a negative electrode active material, the porous silicon structure and the porous silicon-carbon composite can have excellent capacity retention and remarkably enhanced discharge capacity and initial efficiency.

[Fig. 5]

**Description**

**Technical Field**

The present invention relates to a porous silicon structure, to a porous silicon-carbon composite, and to a negative electrode active material comprising the same.

**Background Art**

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well the application thereof to large electronic devices such as automobiles and power storage systems, is being actively conducted.

Carbon materials are widely used as a negative electrode active material of such a lithium secondary battery. Silicon-based negative electrode active materials are being studied in order to further enhance the capacity of a battery. Since the theoretical capacity of silicon (4,199 mAh/g) is greater than that of graphite (372 mAh/g) by 10 times or more, a significant enhancement in the battery capacity is expected.

The reaction scheme when lithium is intercalated into silicon is, for example, as follows:

$$[\text{Reaction scheme 1}] \qquad 22\text{Li} + 5\text{Si} = \text{Li}_{22}\text{Si}_5$$

In a silicon-based negative electrode active material according to the above reaction scheme, an alloy containing up to 4.4 lithium atoms per silicon atom with a high capacity is formed. However, in most silicon-based negative electrode active materials, volume expansion of up to 300% is induced by the intercalation of lithium, which destroys the negative electrode, making it difficult to exhibit high cycle characteristics.

In addition, this volume change may cause cracks on the surface of the negative electrode active material, and an ionic material may be formed inside the negative electrode active material, thereby causing the negative electrode active material to be electrically detached from the current collector. This electrical detachment phenomenon may significantly reduce the capacity retention rate of a battery.

In order to solve this problem, Japanese Patent No. 4393610 discloses a negative electrode active material in which silicon and carbon are mechanically processed to form a composite, and the surface of the silicon particles is coated with a carbon layer using a chemical vapor deposition (CVD) method.

In addition, Japanese Laid-open Patent Publication No. 2016-502253 discloses a negative electrode active material comprising porous silicon-based particles and carbon particles, wherein the carbon particles comprise fine carbon particles and coarse-grained carbon particles having different average particle diameters.

However, although these prior art documents relate to a negative electrode active material comprising silicon and carbon, there is a limit to suppressing volume expansion and contraction during charging and discharging. Thus, there is still a demand for research to solve these problems.

[Prior art documents]

[Patent documents]

(Patent Document 1) Japanese Patent No. 4393610
(Patent Document 2) Japanese Laid-open Patent Publication No. 2016-502253

**Detailed Description of the Invention**

**Technical Problem**

The present invention is devised to solve the problems of the prior art. An object of the present invention is to provide a porous silicon structure with enhanced performance of a secondary battery when applied to a negative electrode active material as it satisfies a specific range of a molar ratio (O/Si) of oxygen (O) atoms to silicon (Si) atoms in the porous silicon structure.

Another object of the present invention is to provide a porous silicon-carbon composite with significantly improved discharge capacity and initial efficiency as well as excellent capacity retention rate when applied to a negative electrode active material as it comprises the porous silicon structure and carbon.

Still another object of the present invention is to provide processes for preparing the porous silicon structure and the porous silicon-carbon composite.

Still another object of the present invention is to provide a negative electrode active material comprising the porous silicon-carbon composite and a lithium secondary battery comprising the same.

**Solution to the Problem**

The present invention provides a porous silicon structure, which comprises silicon particles, wherein the molar ratio (O/Si) of oxygen (O) atoms to silicon (Si) atoms in the porous silicon structure is 0.01 to 0.35.

In addition, the present invention provides a porous silicon-carbon composite, which comprises the porous silicon structure and carbon.

In addition, the present invention provides a process for preparing the porous silicon structure, which comprises a first step of etching a silicon-based raw material powder using an etching solution containing a fluorine (F) atom-containing compound; and a second step of filtering and drying the product obtained by the etching to prepare a porous silicon structure.

In addition, the present invention provides a process for preparing a porous silicon-carbon composite, which comprises a first step of etching a silicon-based raw material powder using an etching solution containing a fluorine (F) atom-containing compound; a second step of filtering and drying the product obtained by the etching to prepare a porous silicon structure; and a third step of forming a carbon layer on the surface of the porous silicon structure by using a chemical thermal decomposition deposition method to prepare a porous silicon-carbon composite.

In addition, the present invention provides a negative electrode active material for a lithium secondary battery, which comprises the porous silicon-carbon composite.

Further, the present invention provides a lithium secondary battery, which comprises the negative electrode active material for a lithium secondary battery.

**Advantageous Effects of the Invention**

According to the embodiment, as the porous silicon structure has a molar ratio (O/Si) of oxygen (O) atoms to silicon (Si) atoms in the porous silicon structure, which satisfies a specific range, when it is used as a negative electrode active material of a secondary battery along with a binder and a conductive material to prepare a negative electrode active material composition, it is readily dispersed, mechanical properties such as strength are excellent, and the performance of a secondary battery can be enhanced when applied to a negative electrode active material.

According to another embodiment, the porous silicon-carbon composite comprising the porous silicon structure and carbon has significantly improved discharge capacity and initial efficiency as well as excellent capacity retention rate when applied to a negative electrode active material.

In addition, the process according to the embodiment has an advantage in that mass production is possible through a continuous process with minimized steps.

**Brief Description of the Drawing**

The following drawings attached to the present specification illustrate preferred embodiments of the present invention and serve to further understand the technical idea of the present invention together with the description of the present invention. Accordingly, the present invention should not be construed as being limited only to those depicted in the drawings.

Fig. 1 shows photographs of the porous silicon structure (B 1) prepared in Example 1 in a magnification of 10,000 and 30,000 as analyzed by an ion beam scanning electron microscope (FIB-SEM).

Fig. 2 shows photographs of the porous silicon-carbon composite (C1) prepared in Example 1 in a magnification of 10,000 and 30,000 as analyzed by an ion beam scanning electron microscope (FIB-SEM).

Fig. 3 shows a transmission electron microscope (TEM) photograph of the surface of the porous silicon-carbon composite (C5) prepared in Example 5.

Fig. 4 shows the measurement results of an X-ray diffraction analysis of the porous silicon-carbon composite (C1) of Example 1.

Fig. 5 shows the measurement results of a Raman analysis of the porous silicon-carbon composite (C1) of Example 1.

**Best Mode for Carrying out the Invention**

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about" unless otherwise indicated.

[Porous silicon structure]

The porous silicon structure according to an embodiment of the present invention comprises silicon particles, wherein the molar ratio (O/Si) of oxygen (O) atoms to silicon (Si) atoms in the porous silicon structure is 0.01 to 0.35.

According to an embodiment of the present invention, it is possible to reduce the number of oxygen atoms present on the surface of the porous silicon structure. That is, the key feature of the present invention lies in that the molar ratio (O/Si) of oxygen (O) atoms to silicon (Si) atoms may be significantly reduced. When the porous silicon structure is used as a negative electrode active material of a secondary battery along with a binder and a conductive material to prepare a negative electrode active material composition, it is readily dispersed, mechanical properties such as strength are excellent, and the performance of a secondary battery can be enhanced when applied to a negative electrode active material.

Specifically, the molar ratio (O/Si) of oxygen (O) atoms to silicon (Si) atoms in the porous silicon structure may be preferably 0.01 to 0.25, more preferably, 0.01 to 0.10, even more preferably, 0.01 to 0.08.

Specifically, according to an embodiment of the present invention, it is possible to remove most of the silicon dioxide contained in the porous silicon structure by etching. In such a case, the surface of the silicon particle may comprise silicon (Si) atoms in a very high fraction as compared with oxygen (O) atoms. That is, the molar ratio O/Si may be significantly reduced. As the porous silicon structure is used as a negative electrode active material, a secondary battery having excellent discharge capacity can be preferably obtained, and the initial efficiency of the secondary battery may be enhanced.

In general, as the ratio of oxygen decreases in a negative electrode active material comprising silicon, high charge and discharge capacity may be achieved, whereas the volume expansion rate due to charging may be increased. On the other hand, as the ratio of oxygen increases, the volume expansion rate may be suppressed, whereas the discharge capacity may be decreased.

According to an embodiment of the present invention, if the molar ratio (O/Si) of oxygen (O) atoms to silicon (Si) atoms of the porous silicon structure is 0.01 or more, expansion and contraction due to charging and discharging may be suppressed. Thus, when the porous silicon structure is used as a negative electrode active material, it is possible to suppress delamination of the negative electrode active material from the negative electrode current collector. In addition, if the molar ratio (O/Si) of oxygen (O) atoms to silicon (Si) atoms is 0.35 or less, sufficient discharge capacity can be secured, so that it is possible to maintain high charge and discharge characteristics.

In addition, the porous silicon structure may comprise a silicon aggregate in which silicon particles are interconnected with each other.

Specifically, the porous silicon structure may comprise a silicon aggregate having a three-dimensional (3D) structure in which two or more silicon particles are interconnected with each other. Since the silicon particles charge lithium, the capacity of a secondary battery may be decreased if silicon particles are not employed. In particular, if it comprises a silicon aggregate in which silicon particles are interconnected with each other, excellent mechanical properties such as strength can be obtained. In addition, the porous silicon structure may be easily dispersed when a negative electrode active material composition is prepared with a binder and a conductive material. When the negative electrode active material composition is applied on a current collector, its workability may be excellent.

In addition, the silicon aggregates may be uniformly distributed inside the porous silicon structure, and silicon particles that are not interconnected with each other may be contained. The silicon particles and/or silicon aggregates may be uniformly distributed inside the porous silicon structure. In such a case, excellent electrochemical properties such as charge and discharge may be achieved.

The silicon particles may comprise crystalline particles and may have a crystallite size of 1 nm to 20 nm in an X-ray diffraction analysis (converted from the X-ray diffraction analysis result).

Specifically, when the porous silicon structure according to an embodiment of the present invention is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the silicon particles may preferably have a crystallite size of 1 nm to 10 nm, more preferably, 1 nm to 6 nm. If the crystallite size of the silicon particles is less than 1 nm, it is difficult to form micropores inside the porous silicon structure, it is not possible to suppress a reduction in the Coulombic efficiency, which represents the ratio of charge capacity to discharge capacity, and the specific surface area is too large, thereby making it impossible to prevent oxidation problems when they are handled in the atmosphere. In addition, if the crystallite size exceeds 20 nm, the micropores cannot adequately suppress the volume expansion of silicon particles that takes place during charging and discharging, and a reduction in the Coulombic efficiency, which represents the ratio of charge capacity to discharge capacity, due to repeated charging and discharging cannot be suppressed.

As the crystallite size of the silicon particles is made smaller within the above range, a denser composite can be obtained, which can enhance the strength of the matrix. Accordingly, in such a case, the performance of the secondary battery such as discharge capacity, initial efficiency, or cycle lifespan characteristics may be further enhanced.

In addition, the porous silicon structure may further comprise amorphous silicon or silicon in a similar phase thereto. Although the silicon particles have high initial efficiency and battery capacity, it is accompanied by a very complex crystal change by electrochemically absorbing, storing, and releasing lithium atoms.

Meanwhile, the porous silicon structure may comprise a plurality of pores.

Since the silicon structure has a porous structure, it is possible to accommodate the volume expansion of silicon particles taking place during the charging and discharging of a secondary battery, thereby effectively alleviating and suppressing a problem caused by the volume expansion.

The porous silicon structure may comprise a plurality of pores in its interior, its surface, or both. The pores may be connected to each other in the silicon structure to form open pores.

When the surface of the porous silicon structure is measured by a gas adsorption method (BET plot method), it may comprise micropores of 2 nm or less and mesopores of greater than 2 nm to 50 nm.

The pore volume of the micropores of 2 nm or less may be 0.1 $cm^3$/g to 0.5 $cm^3$/g, preferably, 0.15 $cm^3$/g to 0.45 $cm^3$/g, more preferably, 0.2 $cm^3$/g to 0.4 $cm^3$/g.

The pore volume of the mesopores of greater than 2 nm to 50 nm may be 0.2 $cm^3$/g to 0.7 $cm^3$/g, preferably, 0.2 $cm^3$/g to 0.6 $cm^3$/g, more preferably, 0.2 $cm^3$/g to 0.5 $cm^3$/g.

If the pores comprise micropores of 2 nm or less and mesopores of greater than 2 nm to 50 that satisfy the pore volumes, the pores in the silicon structure may be uniform and contained in a large amount.

In addition, the pores may further comprise macropores of greater than 50 nm to 250 nm. The pore volume of the macropores of greater than 50 nm to 250 nm may be 0.01 $cm^3$/g to 0.3 $cm^3$/g, preferably, 0.01 $cm^3$/g to 0.2 $cm^3$/g, more preferably, 0.01 $cm^3$/g to 0.15 $cm^3$/g.

In addition, it is preferable that silicon particles and/or silicon aggregates in which silicon particles are interconnected with each other in the porous silicon structure in which pores are formed are uniformly distributed in the interior of the porous silicon structure. As a result, the porous silicon structure has excellent mechanical properties such as strength. In addition, since it has a porous structure, it is possible to accommodate the volume expansion of silicon particles taking place during the charging and discharging of a secondary battery, thereby effectively alleviating and suppressing a problem caused by the volume expansion.

According to an embodiment of the present invention, the porous silicon structure may further comprise a silicon oxide compound.

The silicon oxide compound may be a silicon-based oxide represented by the formula $SiO_x$ ($0.5 \leq x \leq 2$). The silicon oxide compound may be specifically $SiO_x$ ($0.8 < x \leq 1.5$), more specifically $SiO_x$ ($0.9 < x \leq 1.1$). In the formula $SiO_x$, if the value of x is less than 0.5, expansion or contraction may be increased and lifespan characteristics may be deteriorated during the charging and discharging of a secondary battery. In addition, if x exceeds 2, there may be a problem in that the initial efficiency of the secondary battery is decreased as the amount of inactive oxides increases.

The silicon oxide compound may be employed in an amount of 0.1% by mole to 5% by mole based on the total weight of the porous silicon structure.

If the content of the silicon oxide compound is less than 0.1% by weight, the volume of the secondary battery may expand, and the lifespan characteristics thereof may be deteriorated. On the other hand, if the content of the silicon oxide compound exceeds 5% by weight, the initial irreversible reaction of the secondary battery may be increased, thereby deteriorating the initial efficiency.

In the present specification, the disposition of the silicon particles and the characteristics of the surface thereof may cover the disposition of the silicon aggregates and the surface of the silicon aggregates within a range that does not impair the effects of the present invention.

The porous silicon structure according to an embodiment of the present invention may further comprise a silicon oxide ($SiO_x$, $0.1 < x \leq 2$) formed on the surface of the silicon particles. The silicon oxide ($SiO_x$, $0.1 < x \leq 2$) may be formed by oxidation of the silicon.

The content of oxygen (O) in the porous silicon structure may be 0.1% by weight to 15% by weight, preferably, 0.5% by weight to 10% by weight, more preferably, 0.5% by weight to 5% by weight, based on the total weight of the porous silicon structure. If the content of oxygen (O) in the porous silicon structure is less than 0.1% by weight, the degree of expansion is increased during charging of the secondary battery, which is not preferable because the cycle characteristics are deteriorated. If the content of oxygen (O) in the porous silicon structure exceeds 15% by weight, when the porous silicon structure is used as a negative electrode active material, an irreversible reaction with lithium increases, which deteriorates the initial charge and discharge efficiency, it may be readily delaminated from the negative electrode current collector, and there may be a problem in that the charge and discharge cycle characteristics are deteriorated.

The porous silicon structure may have an average particle diameter ($D_{50}$) of 1 $\mu$m to 15 $\mu$m, preferably, 2 $\mu$m to 10 $\mu$m, more preferably, 3 $\mu$m to 8 $\mu$m. If the average particle diameter ($D_{50}$) of the porous silicon structure exceeds 15 $\mu$m, the expansion of the porous silicon structure due to charging of lithium ions becomes severe, and the binding capability between the particles in the structure and the binding capability between the particles and the current collector are deteriorated as charging and discharging are repeated, so that the lifespan characteristics may be significantly reduced. In addition, there is a concern that the activity may be deteriorated due to a decrease in the specific surface area. If the average particle diameter ($D_{50}$) of the porous silicon structure is less than 1 $\mu$m, there is a concern that the dispersibility may be deteriorated due to the aggregation of the porous silicon structure during the preparation of a negative electrode slurry (i.e., a negative electrode active material composition) using the same.

The porous silicon structure may have a specific gravity of 1.5 g/cm$^3$ to 2.3 g/cm$^3$, preferably, 1.6 g/cm$^3$ to 2.3 g/cm$^3$, more preferably, 1.6 g/cm$^3$ to 2.2 g/cm$^3$.

Here, specific gravity may refer to particle density, density, or true density. According to an embodiment of the present invention, for the measurement of specific gravity, for example, the measurement of specific gravity by a dry density meter, Acupick II1340 manufactured by Shimadzu Corporation may be used as a dry density meter. The purge gas to be used may be helium gas, and the measurement may be carried out after 200 times of purge in a sample holder set at a temperature of 23°C.

If the specific gravity of the porous silicon structure is 1.5 g/cm$^3$ or more, it is possible to suppress a reduction in the cycle characteristics of the secondary battery. If the specific gravity is 2.3 g/cm$^3$ or less, the impregnability of an electrolyte is enhanced, which increases the utilization rate of the negative electrode active material, so that the initial charge and discharge capacity can be enhanced.

The porous silicon structure may have a specific surface area (Brunauer-Emmett-Teller method; BET) of 100 m$^2$/g to 1,600 m$^2$/g, preferably, 200 m$^2$/g to 1,400 m$^2$/g, more preferably, 300 m$^2$/g to 1,200 m$^2$/g. If the specific surface area of the porous silicon structure is less than 100 m$^2$/g, the rate characteristics of the secondary battery may be deteriorated. If it exceeds 1,600 m$^2$/g, it may be difficult to prepare a negative electrode slurry suitable for application to a negative electrode current collector of the secondary battery, the contact area with an electrolyte is increased, and the decomposition reaction of the electrolyte may be accelerated or a side reaction of the secondary battery may be caused.

The specific surface area of the porous silicon structure may be obtained from the sum of the surface area of the particle surface of the porous silicon structure and the surface area of the pores (micropores, macropores, and mesopores) present on the surface and inside of the porous silicon structure.


**[Porous silicon-carbon composite]**


According to an embodiment of the present invention, there is provided a porous silicon-carbon composite, which comprises the porous silicon structure and carbon.

Specifically, the porous silicon-carbon composite comprises a porous silicon structure and carbon, wherein the porous silicon structure comprises silicon particles, and the molar ratio (O/Si) of oxygen (O) atoms to silicon (Si) atoms in the porous silicon structure is 0.01 to 0.35.

The molar ratio (O/Si) of oxygen (O) atoms to silicon (Si) atoms in the porous silicon-carbon composite may be the same as, or slightly different from, the molar ratio (O/Si) of oxygen (O) atoms to silicon (Si) atoms in the silicon structure. That is, the molar ratio (O/Si) of oxygen (O) atoms to silicon (Si) atoms in the porous silicon-carbon composite may be 0.01 to 0.35. When the porous silicon-carbon composite in which the molar ratio (O/Si) of oxygen (O) atoms to silicon (Si) atoms satisfies the above range is applied to a negative electrode active material, it is possible to significantly enhance the discharge capacity and initial efficiency while an excellent capacity retention rate is maintained.

In addition, as the porous silicon-carbon composite comprises carbon, it is possible to secure adequate electrical conductivity of the porous silicon-carbon composite and to adjust the specific surface area appropriately. Thus, when it is used as a negative electrode active material of a secondary battery, the performance of the secondary battery can be further enhanced.

The molar ratio (O/Si) of oxygen (O) atoms to silicon (Si) atoms in the porous silicon-carbon composite may be preferably 0.01 to 0.25, more preferably, 0.01 to 0.10, even more preferably, 0.01 to 0.08.

According to an embodiment of the present invention, if the molar ratio (O/Si) of oxygen (O) atoms to silicon (Si) atoms in the porous silicon-carbon composite is 0.01 or more, expansion and contraction due to charging and discharging may be suppressed. Thus, when the porous silicon-carbon composite is used as a negative electrode active material, it is possible to suppress delamination of the negative electrode active material from the negative electrode current collector. In addition, if the molar ratio (O/Si) of oxygen (O) atoms to silicon (Si) atoms is 0.35 or less, sufficient discharge capacity can be secured, so that it is possible to maintain high charge and discharge characteristics.

In addition, the porous silicon-carbon composite is a composite in which silicon aggregates, in which a plurality of silicon particles are interconnected with each other, are uniformly distributed in a composite whose structure is in the form of a single mass, for example, a polyhedral, spherical, or similar shape. It may be in a single structure in which carbon, more specifically, a carbon layer comprising carbon surrounds a part or all of the surfaces of one or more silicon particles or the surfaces of secondary silicon particles (silicon aggregates) formed by the aggregation of two or more silicon particles.

In the porous silicon-carbon composite, the volume expansion that takes place during the charging and discharging of the secondary battery is concentrated on the pores rather than the outer part of the negative electrode active material, thereby effectively controlling the volume expansion and enhancing the lifespan characteristics of the lithium secondary battery. In addition, the electrolyte can easily penetrate into the porous structure to enhance the output characteristics, so that the performance of the lithium secondary battery can be further enhanced.

In the present specification, pores may be used interchangeably with voids. In addition, the pores may comprise closed pores. The closed pores refer to independent pores that are not connected to other pores because all of the walls of the pores are formed in a closed structure. In addition, the pores may further comprise open pores. The open pores are formed in an open structure in which at least a part of the walls of the pores are open, so that they may be, or may not be, connected to other pores. In addition, they may refer to pores exposed to the outside as they are disposed on the surface of the silicon structure.

The porous silicon-carbon composite may have a porosity of 0.5% by volume to 40% by volume based on the volume of the porous silicon-carbon composite. The porosity may be a porosity of the closed pores in the porous silicon-carbon composite. Specifically, the porosity of the porous silicon-carbon composite may be preferably 0.5% by volume to 30% by volume, more preferably, 1% by volume to 15% by volume, based on the volume of the porous silicon-carbon composite.

Here, porosity refers to "(pore volume per unit mass)/ I (specific volume + pore volume per unit mass)}." It may be measured by a mercury porosimetry method or a Brunauer- Emmett-Teller (BET) measurement method.

In the present specification, the specific volume is calculated as 1/(particle density) of a sample. The pore volume per unit mass is measured by the BET method to calculate the porosity (%) from the above equation.

If the porosity of the porous silicon-carbon composite satisfies the above range, it is possible to obtain a buffering effect of volume expansion while maintaining sufficient mechanical strength when it is applied to the negative electrode active material of a secondary battery. Thus, it is possible to minimize the problem of volume expansion due to the use of silicon particles, to achieve high capacity, and to enhance the lifespan characteristics. If the porosity of the porous silicon-carbon composite is less than 0.5% by volume, it may be difficult to control the volume expansion of the negative electrode active material during charging and discharging. If it exceeds 40% by volume, the mechanical strength is reduced due to a large number of pores present in the negative electrode active material, and there is a concern that the negative electrode active material may be collapsed in the process of manufacturing a secondary battery, for example, during the mixing of the negative electrode active material slurry and the rolling step after coating.

The porous silicon-carbon composite may comprise a plurality of pores, and the diameters of the pores may be the same as, or different from, each other.

In the porous silicon-carbon composite, the carbon may be present on the surface of the silicon particles contained in the porous silicon structure. In addition, the carbon may be present on the surface of the silicon aggregates contained in the porous silicon-carbon composite.

In addition, the carbon may serve as a matrix, and the silicon particles and the pores may be dispersed in the carbon matrix.

Specifically, the porous silicon-carbon composite may have a sea-island structure in which the silicon particles or closed pores (v) form islands and carbon forms a sea. The pores comprise open pores and closed pores. The closed pores may comprise pores whose inside is not coated with carbon.

In the porous silicon-carbon composite, the carbon may be present on the surface of the porous silicon structure or inside the open pores.

The state in which the silicon particles or carbon are uniformly dispersed is confirmed through image observation of a dark field image or a bright field image by a transmission electron microscope (TEM).

In addition, the carbon is present on the surface of the silicon particles. The carbon may serve as a matrix, and the silicon particles and the pores may be dispersed in the carbon matrix.

In addition, if a silicon oxide ($SiO_x$, $0.1 < x \leq 2$) formed on the surface of the silicon particles is further contained, the carbon may be present on the surface of the silicon oxide ($SiO_x$, $0.1 < x \leq 2$).

The carbon may further form a carbon layer on the surface of the porous silicon structure.

As the porous silicon-carbon composite comprises a carbon layer, it is possible to solve the difficulty of electrical contact between particles due to the presence of pores and to provide excellent electrical conductivity even after the electrode has been expanded during charging and discharging, so that the performance of the secondary battery can be further enhanced.

In addition, according to an embodiment of the present invention, the thickness of the carbon layer or the amount of carbon may be controlled, so that it is possible to achieve appropriate electrical conductivity, as well as to prevent a deterioration of the lifespan characteristics, to thereby achieve a high-capacity negative electrode active material.

Meanwhile, since the surfaces of the porous structure particles or the inside thereof and the pores therein may be covered by carbon coating, the specific surface area of the porous silicon-carbon composite may vary significantly.

The porous silicon-carbon composite may have a specific surface area (Brunauer-Emmett-Teller method; BET) of 3 $m^2$/g to 50 $m^2$/g, preferably, or 3 $m^2$/g to 40 $m^2$/g. If the specific surface area of the porous silicon-carbon composite is less than 3 $m^2$/g, the rate characteristics of the secondary battery may be deteriorated. If it exceeds 50 $m^2$/g, it may be difficult to prepare a negative electrode slurry suitable for application to a negative electrode current collector of the secondary battery, the contact area with an electrolyte increases, and the decomposition reaction of the electrolyte may be accelerated or a side reaction of the secondary battery may be caused.

The porous silicon-carbon composite may have a specific gravity of 1.8 $g/cm^3$ to 2.5 $g/cm^3$, preferably, 2.0 $g/cm^3$ to 2.5 $g/cm^3$, more preferably, 2.0 $g/cm^3$ to 2.4 $g/cm^3$. The specific gravity may vary depending on the coating amount of a carbon layer. While the amount of carbon is fixed, the greater the specific gravity within the above range, the fewer pores in the composite. Therefore, when it is used as a negative electrode active material, the conductivity is enhanced, and the strength of the matrix is fortified, thereby enhancing the initial efficiency and cycle lifespan characteristics. In such an event, specific gravity may refer to particle density, density, or true density. The measurement method is as described above.

If the specific gravity of the porous silicon-carbon composite is 1.8 $g/cm^3$ or more, cracks in the negative electrode active material powder due to volume expansion and contraction of the anode active material powder during charging and discharging may be minimized, whereby the cycle deterioration may be suppressed. If the specific gravity is 2.5 $g/cm^3$ or less, the impregnability of an electrolyte is enhanced, which increases the utilization rate of the negative electrode active material, so that the initial charge and discharge capacity can be enhanced.

Since the porous silicon-carbon composite according to an embodiment of the present invention has a porous structure, an electrolyte can easily penetrate into the porous structure to enhance the output characteristics. Thus, the porous silicon-carbon composite can be advantageously used in the preparation of a negative electrode active material for a lithium secondary battery and a lithium secondary battery comprising the same.

Meanwhile, in the porous silicon-carbon composite, the content of silicon (Si) may be 30% by weight to 90% by weight, 30% by weight to 80% by weight, or 30% by weight to 70% by weight, based on the total weight of the porous silicon-carbon composite.

If the content of silicon (Si) is less than 30% by weight, the amount of an active material for occlusion and release of lithium is small, which may reduce the charge and discharge capacity of the lithium secondary battery. On the other hand, if it exceeds 90% by weight, the charging and discharge capacity of the lithium secondary battery may be increased, whereas the expansion and contraction of the electrode during charging and discharging may be excessively increased, and the negative electrode active material powder may be further atomized, which may deteriorate the cycle characteristics.

The content of carbon (C) may be 10% by weight to 90% by weight based on the total weight of the porous silicon-carbon composite. Specifically, the content of carbon (C) may be 10% by weight to 70% by weight, 15% by weight to 60% by weight, or 20% by weight to 50% by weight, based on the total weight of the porous silicon-carbon composite.

If the content of carbon (C) is less than 10% by weight, a sufficient effect of enhancing conductivity cannot be expected, and there is a concern that the electrode lifespan of the lithium secondary battery may be deteriorated. In addition, if it exceeds 90% by weight, the discharge capacity of the secondary battery may be decreased and the bulk density may be decreased, so that the charge and discharge capacity per unit volume may be deteriorated.

The carbon layer may have a thickness of 1 nm to 300 nm. The thickness of the carbon layer may be preferably 1 nm to 40 nm, more preferably 1 nm to 30 nm. If the thickness of the carbon layer is 1 nm or more, an enhancement in conductivity may be achieved. If it is 300 nm or less, a decrease in the capacity of the secondary battery may be suppressed.

The average thickness of the carbon layer may be measured, for example, by the following procedure.

First, the negative electrode active material is observed at an arbitrary magnification by a transmission electron microscope (TEM). The magnification is preferably, for example, a degree that can be confirmed with the naked eyes. Subsequently, the thickness of the carbon layer is measured at arbitrary 15 points. In such an event, it is preferable to select the measurement positions at random widely as much as possible, without concentrating on a specific region. Finally, the average value of the thicknesses of the carbon layer at the 15 points is calculated.

The carbon layer may comprise at least one selected from the group consisting of graphene, reduced graphene oxide, a carbon nanotube, a carbon nanofiber, and graphite. Specifically, it may comprise graphene. The at least one selected from the group consisting of graphene, reduced graphene oxide, a carbon nanotube, a carbon nanofiber, and graphite may be contained not only in the carbon layer present on the surface of the porous silicon structure, but also on the surfaces of the silicon particles and in the carbon matrix.

The porous silicon-carbon composite may have an average particle diameter ($D_{50}$) of 2 $\mu$m to 15 $\mu$m. In addition, the average particle diameter ($D_{50}$) is a value measured as a diameter average value ($D_{50}$), i.e., a particle size or median diameter when the cumulative volume is 50% in particle size distribution measurement according to a laser beam diffraction method. Specifically, the average particle diameter ($D_{50}$) may be preferably 3 $\mu$m to 10 $\mu$m, more preferably 3 $\mu$m to 8 $\mu$m. If the average particle diameter ($D_{50}$) is less than 2 $\mu$m, there is a concern that the dispersibility may be deteriorated due to the aggregation of particles of the porous silicon-carbon composite during the preparation of a negative electrode slurry (i.e., a negative electrode active material composition) using the same. On the other hand, if $D_{50}$ exceeds 15 $\mu$m, the expansion of the composite particles due to charging of lithium ions becomes severe, and the binding capability between the particles of the composite and the binding capability between the particles and the current collector are deteriorated as charging and discharging are repeated, so that the lifespan characteristics may be significantly reduced. In addition, there may be a concern that the activity may be deteriorated due to a decrease in the specific surface area. More specifically, in view of the remarkable improvement effect of the optimization of the average particle diameter ($D_{50}$) of the porous silicon-carbon composite, the average particle diameter ($D_{50}$) of the porous silicon-carbon composite particles may be 3 $\mu$m to 6 $\mu$m.

## [Process for preparing a porous silicon structure]

The process for preparing the porous silicon structure according to an embodiment of the present invention comprises a first step of etching a silicon-based raw material powder using an etching solution containing a fluorine (F) atom-containing compound; and a second step of filtering and drying the product obtained by the etching to prepare a porous silicon structure.

The process according to an embodiment has an advantage in that mass production is possible through a continuous process with minimized steps.

Specifically, in the process for preparing a porous silicon-carbon composite, the first step may comprise etching a silicon-based raw material powder using an etching solution containing a fluorine (F) atom-containing compound. The silicon-based raw material powder may comprise a powder comprising silicon capable of reacting with lithium, for example, a powder comprising at least two of silicon, silicon oxide, and silicon dioxide.

In addition, the process may further comprise forming a carbon layer on the surface of the silicon-based raw material powder by using a chemical thermal decomposition deposition method. Thus, a silicon-based raw material powder on which a carbon layer has been formed may be used as the silicon-based raw material powder.

Specifically, once a carbon layer has been formed on the surface of the silicon-based raw material powder comprising the silicon particles, the etching process of the first step may be carried out. In such a case, there may be an advantage in that uniform etching is possible and a high yield may be obtained.

The step of forming a carbon layer may be carried out by a process similar or identical to the process of forming a carbon layer in the third step of the process for preparing a porous silicon-carbon composite to be described below.

The etching step may comprise dry etching and wet etching.

If dry etching is used, selective etching may be possible.

Silicon dioxide of the silicon-based raw material powder is dissolved and eluted by the etching step to thereby form pores.

In addition, pores may be considered to be formed by the following Reaction Schemes 2 and 3.

[Reaction scheme 2] $\quad\quad$ $SiO_2 + 4HF\ (gas) \rightarrow SiF_4 + 2H_2O$

[Reaction scheme 3] $\quad\quad$ $SiO_2 + 6HF\ (aq.\ solution) \rightarrow H_2SiF_6 + 2H_2O$

Pores (voids) may be formed where silicon dioxide is dissolved and removed in the form of $SiF_4$ and $H_2SiF_6$ by the reaction mechanism as in the above reaction schemes.

In addition, silicon dioxide contained in the porous silicon structure may be removed depending on the degree of etching, and pores may be formed therein.

The degree of formation of pores may vary with the degree of etching.

In addition, the ratio of O/Si and specific surface area of the porous silicon structure upon etching may significantly vary, respectively. In addition, the specific surface area and specific gravity in the silicon structure in which pores are formed may significantly vary before and after the coating of carbon.

It is possible to obtain a porous silicon structure powder having a plurality of pores formed on the surface of the porous silicon structure particles, or on the surface and inside thereof, through the etching.

Here, etching refers to a process in which the silicon-based raw material powder is treated with an etching solution containing a fluorine (F) atom-containing compound.

A commonly used etching solution containing a fluorine atom may be used without limitation within a range that does not impair the effects of the present invention as the etching solution containing a fluorine (F) atom-containing compound.

Specifically, the fluorine (F) atom-containing compound may comprise at least one selected from the group consisting of HF, $NH_4F$, and $HF_2$. As the fluorine (F) atom-containing compound is used, the etching step may be carried out more quickly.

The etching solution may further comprise one or more acids selected from the group consisting of organic acids, sulfuric acid, hydrochloric acid, phosphoric acid, nitric acid, and chromic acid.

As the etching conditions, the stirring temperature (processing temperature) may be, for example, 10°C to 90°C, preferably, 10°C to 80°C, more preferably, 20°C to 70°C.

The porous silicon structure obtained upon the etching may comprise silicon particles that are porous.

It is possible to obtain a porous silicon structure having a plurality of pores formed on the surface, inside, or both of the porous silicon structure through the etching. Here, the porous silicon structure may have a three-dimensional (3D) structure in which two or more silicon particles are interconnected with each other.

In addition, it is characterized in that the average particle diameter of the porous silicon structure hardly changes by etching.

That is, the average particle diameter of the silicon-based raw material powder before etching and the average particle diameter of the porous silicon structure obtained by etching are approximately the same. The difference (change) in the average particle diameter of the silicon-based raw material powder and that of the porous silicon structure may be within about 5%.

In addition, the number of oxygen present on the surface of the porous silicon structure may be lowered by the etching. That is, it is possible to significantly lower the oxygen fraction on the surface of the porous silicon structure and to reduce the surface resistance through the etching. As a result, when the porous silicon structure is applied to a negative electrode active material, the electrochemical properties, particularly, lifespan characteristics of the lithium secondary battery can be remarkably improved.

In addition, as the selective etching removes a large amount of silicon dioxide, the silicon particles may comprise silicon (Si) in a very high fraction as compared with oxygen (O) on their surface. That is, the molar ratio (O/Si) of oxygen (O) atoms to silicon (Si) atoms present in the porous silicon structure may be significantly reduced. In such an event, it is possible to obtain a secondary battery having an excellent capacity retention rate and enhanced discharge capacity and initial efficiency.

In addition, pores or voids can be formed at positions where silicon dioxide is removed. As a result, the specific surface area of the porous silicon structure may be increased as compared with the specific surface area of the silicon-based raw material before etching.

According to an embodiment of the present invention, physical properties such as element content and specific surface area may vary before and after the etching step. That is, physical properties such as element content and specific surface area of the silicon-based raw material before the etching step and the silicon structure after the etching step may vary.

In the process for preparing the porous silicon structure, the second step may comprise filtering and drying the product obtained by the etching to obtain a porous silicon structure. The filtration and drying step may be carried out by a commonly used method.

The process according to an embodiment of the present invention has an advantage in that mass production is possible through a continuous process with minimized steps.

**[Process for preparing a porous silicon-carbon composite]**

According to an embodiment of the present invention, there is provided a process for preparing a porous silicon-carbon composite using the porous silicon structure.

The process for preparing a porous silicon-carbon composite according to an embodiment of the present invention comprises a first step of etching a silicon-based raw material powder using an etching solution containing a fluorine (F) atom-containing compound; a second step of filtering and drying the product obtained by the etching to prepare a porous silicon structure; and a third step of forming a carbon layer on the surface of the porous silicon structure by using a chemical thermal decomposition deposition method to prepare a porous silicon-carbon composite.

The electrical contact between the particles of the porous silicon-carbon composite may be enhanced by the step of formation of a carbon layer. In addition, as the charge and discharge are carried out, excellent electrical conductivity may be imparted even after the electrode is expanded, so that the performance of the secondary battery can be further enhanced. Specifically, the carbon layer may increase the conductivity of the negative electrode active material to enhance the output characteristics and cycle characteristics of the battery and may increase the stress relaxation effect when the volume of the active material is changed.

Hereinafter, the process for preparing a porous silicon-carbon composite will be described in detail.

The first and second steps are the same as those described in the process for preparing a porous silicon structure.

In the process for preparing a porous silicon-carbon composite, the third step may comprise forming a carbon layer on the surface of the porous silicon structure by using a chemical thermal decomposition deposition method to prepare a porous silicon-carbon composite.

The carbon layer may comprise at least one selected from the group consisting of graphene, reduced graphene oxide, a carbon nanotube, a carbon nanofiber, and graphite.

The step of formation of a carbon layer may be carried out by injecting at least one carbon source gas selected from a compound represented by the following Formulae 1 to 3 and carrying out a reaction of the porous silicon structure obtained in the third step in a gaseous state at 400°C to 1,200°C.

$$[Formula\ 1] \qquad C_NH_{(2N+2-A)}[OH]_A$$

In Formula 1, N is an integer of 1 to 20, and A is 0 or 1,

$$[Formula\ 2] \qquad C_NH_{(2N-B)}$$

in Formula 2, N is an integer of 2 to 6, and B is an integer of 0 to 2,

$$[Formula\ 3] \qquad C_xH_yO_z$$

in Formula 3, x is an integer of 1 to 20, y is an integer of 0 to 25, and z is an integer of 0 to 5.

The compound represented by Formula 1 may be at least one selected from the group consisting of methane, ethane, propane, butane, methanol, ethanol, propanol, propanediol, and butanediol. The compound represented by Formula 2 may be at least one selected from the group consisting of ethylene, acetylene, propylene, butylene, butadiene, and cyclopentene. The compound represented by Formula 3 may be at least one selected from the group consisting of benzene, toluene, xylene, ethylbenzene, naphthalene, anthracene, and dibutyl hydroxy toluene (BHT).

In addition, a carbon coating may be uniformly formed on the surface of the pores in the interior of the porous silicon-carbon composite. This is preferable since the cycle lifespan is further enhanced.

The carbon source gas may further comprise at least one inert gas selected from hydrogen, nitrogen, helium, and argon.

The reaction may be carried out, for example, at 400°C to 1,200°C, specifically, 500°C to 1, 100°C, more specifically, 600°C to 1,000°C.

The reaction time (or thermal treatment time) may be appropriately adjusted depending on the thermal treatment temperature, the pressure during the thermal treatment, the composition of the gas mixture, and the desired amount of carbon coating. For example, the reaction time may be 10 minutes to 100 hours, specifically, 30 minutes to 90 hours, more specifically, 50 minutes to 40 hours, but it is not limited thereto.

In the process for preparing a porous silicon-carbon composite according to an embodiment of the present invention, it is possible to form a thin and uniform carbon layer comprising at least one selected from graphene, reduced graphene oxide, a carbon nanotube, a carbon nanofiber, and graphite as a main component on the surface of the silicon structure even at a relatively low temperature through a gas-phase reaction of the carbon source gas. In addition, the detachment reaction in the carbon layer does not substantially take place.

In addition, since a carbon layer is uniformly formed over the entire surface of the porous silicon structure through the gas-phase reaction, a carbon film (carbon layer) having high crystallinity can be formed. Thus, when the porous silicon-carbon composite is used as a negative electrode active material, the electrical conductivity of the negative electrode active material can be enhanced without changing the structure.

According to an embodiment of the present invention, when a reactive gas containing the carbon source gas and an inert gas is supplied to the surface of the silicon structure, the reactive gas penetrates into the open pores of the silicon structure, and one or more graphene-containing materials selected from graphene, reduced graphene oxide, and graphene oxide, and a conductive carbon material such as a carbon nanotube and a carbon nanofiber are grown on the surface of the silicon structure. For example, as the reaction time elapses, the conductive carbon material deposited on the surface of silicon in the silicon structure is gradually grown to obtain a porous silicon-carbon composite.

The specific surface area of the porous silicon-carbon composite may decrease according to the amount of carbon coating.

The structure of the graphene-containing material may be a layer, a nanosheet type, or a structure in which several flakes are mixed.

If a carbon layer comprising a graphene-containing material is uniformly formed over the entire surface of the silicon structure, it is possible to suppress volume expansion as a graphene-containing material that has enhanced conductivity and is flexible for volume expansion is directly grown on the surface of the silicon particles. In addition, the coating of a carbon layer may reduce the chance that silicon directly meets the electrolyte, thereby reducing the formation of a solid electrolyte interphase (SEI) layer.

In addition, according to an embodiment of the present invention, one or more of the porous structure powders may be interconnected with each other to form an aggregate after the third step (after the formation of a carbon layer in the third step), and the process may further comprise pulverizing or crushing and classifying the porous silicon-carbon composite such that the average particle diameter of the porous silicon-carbon composite is 2 $\mu$m to 15 $\mu$m. The classification may be carried out to adjust the particle size distribution of the porous silicon-carbon composite, for which dry classification, wet classification, or classification using a sieve may be used. In the dry classification, the steps of dispersion, separation, collection (separation of solids and gases), and discharge are carried out sequentially or simultaneously using an air stream, in which pretreatment (adjustment of moisture, dispersibility, humidity, and the like) may be carried out prior to the classification so as not to decrease the classification efficiency caused by interference between particles, particle shape, airflow disturbance, velocity distribution, and influence of static electricity, and the like, to thereby adjust the moisture or oxygen concentration in the air stream used. In addition, a desired particle size distribution may be obtained by carrying out crushing or pulverization and classification of the porous silicon-carbon composite at one time. After the crushing or pulverization, it is effective to divide the coarse powder part and the granular part with a classifier or sieve.

The process according to an embodiment of the present invention has an advantage in that mass production is possible through a continuous process with minimized steps.

A secondary battery using the porous silicon-carbon composite as a negative electrode may enhance its capacity, capacity retention rate, and initial efficiency.

## Negative electrode active material

The negative electrode active material according to an embodiment of the present invention may comprise the porous silicon structure.

In addition, the negative electrode active material according to an embodiment of the present invention may comprise the porous silicon-carbon composite.

In addition, the negative electrode active material may further comprise a carbon-based negative electrode material, specifically, a graphite-based negative electrode material.

The negative electrode active material may be used as a mixture of the porous silicon structure or the porous silicon-carbon composite and the carbon-based negative electrode material, for example, a graphite-based negative electrode material. In such an event, the electrical resistance of the negative electrode active material can be reduced, while the expansion stress involved in charging can be relieved at the same time. The carbon-based negative electrode material may comprise, for example, at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

The content of the carbon-based negative electrode material may be 5% by weight to 95% by weight, preferably, 10% by weight to 70% by weight, more preferably, 10% by weight to 60% by weight, based on the total weight of the negative electrode active material.

In addition, if silicon particles having a crystallite size of 20 nm or less are used as mixed with graphite-based materials generally having low volume expansion, only the silicon particles do not cause large volume expansion. Since there is little separation of the graphite-based material and the silicon particles, a secondary battery excellent in cycling characteristics can be obtained.

## Secondary battery

According to an embodiment of the present invention, the present invention may provide a negative electrode comprising the negative electrode active material and a secondary battery comprising the same.

The secondary battery may comprise a positive electrode, a negative electrode, a separator interposed between the positive electrode and the negative electrode, and a non-aqueous liquid electrolyte in which a lithium salt is dissolved. The negative electrode may comprise a negative electrode active material comprising a porous silicon-carbon composite.

The negative electrode may be composed of a negative electrode mixture only or may be composed of a negative electrode current collector and a negative electrode mixture layer (negative electrode active material layer) supported thereon. Similarly, the positive electrode may be composed of a positive electrode mixture only or may be composed of a positive electrode current collector and a positive electrode mixture layer (positive electrode active material layer) supported thereon. In addition, the negative electrode mixture and the positive electrode mixture may further comprise a conductive agent and a binder.

Materials known in the field may be used as the material constituting the negative electrode current collector and the material constituting the positive electrode current collector. Materials known in the field may be used as the binder and the conductive material added to the negative electrode and the positive electrode.

If the negative electrode is composed of a current collector and an active material layer supported thereon, the negative electrode may be prepared by coating the negative electrode active material composition comprising the porous silicon-carbon composite on the surface of the current collector and drying it.

In addition, the secondary battery comprises a non-aqueous liquid electrolyte in which the non-aqueous liquid electrolyte may comprise a non-aqueous solvent and a lithium salt dissolved in the non-aqueous solvent. A solvent commonly used in the field may be used as a non-aqueous solvent. Specifically, an aprotic organic solvent may be used. Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

The secondary battery may comprise a non-aqueous secondary battery.

The negative electrode active material and the secondary battery using the porous silicon structure or the porous silicon-carbon composite may enhance the capacity, initial charge and discharge efficiency, and capacity retention rate thereof.

## Mode for Carrying out the Invention

Hereinafter, the present invention will be described in detail with reference to examples. The following examples are only illustrative of the present invention, and the scope of the present invention is not limited thereto.

## Example

### <Example 1>

(1) Step 1: 50 g of the silicon oxide ($SiO_x$, x = 0.9) powder prepared by vapor deposition using a silicon powder and a silicon dioxide powder and having the physical properties shown in Table 1 below was dispersed in water, which was stirred at a speed of 300 rpm, and 50 ml of an aqueous solution of 40% by weight of HF was added as an etching solution to carry out etching the silicon oxide-based raw material powder for 1 hour.

(2) Step 2: The product obtained by the etching above was filtered and dried at 150°C for 2 hours. Then, in order to control the particle size of the porous composite, it was crushed using a mortar to have an average particle diameter of 5.1 $\mu$m, to thereby prepare a porous silicon structure (B1).

(3) Step 3: 10 g of the porous silicon structure was placed inside a tubular electric furnace, and argon (Ar) and methane gas flowed at a rate of 1 liter/minute, respectively. It was maintained at 900°C for 1 hour and then cooled to room temperature, whereby the surface of the porous silicon structure was coated with carbon, to thereby prepare a porous silicon-carbon composite having the content of each component and physical properties shown in Table 3 below.

(4) Step 4: In order to control the particle size of the porous silicon-carbon composite, it was crushed and classified to have an average particle diameter of 5.1 $\mu$m by a mechanical method, thereby preparing a porous silicon-carbon composite (C1).

## Manufacture of a secondary battery

A negative electrode and a battery (coin cell) comprising the porous silicon-carbon composite as a negative electrode active material were prepared.

The negative electrode active material, Super-P as a conductive material, and polyacrylic acid were mixed at a weight ratio of 80:10:10 with water to prepare a negative electrode active material composition having a solids content of 45%.

The negative electrode active material composition was applied to a copper foil having a thickness of 18 $\mu$m and dried to prepare an electrode having a thickness of 70 $\mu$m. The copper foil coated with the electrode was punched in a circular shape having a diameter of 14 mm to prepare a negative electrode plate for a coin cell.

Meanwhile, a metallic lithium foil having a thickness of 0.3 mm was used as a positive electrode plate.

A porous polyethylene sheet having a thickness of 25 $\mu$m was used as a separator. A liquid electrolyte in which $LiPF_6$ had been dissolved at a concentration of 1 M in a mixed solvent of ethylene carbonate (EC) and diethylene carbonate (DEC) at a volume ratio of 1:1 was used as an electrolyte. The above components were employed to manufacture a coin cell (battery) having a thickness of 3.2 mm and a diameter of 20 mm.

**<Examples 2 to 5>**

A porous silicon-carbon composite was prepared in the same manner as in Example 1 and a secondary battery using the same was manufactured, except that a porous silicon structure having the element content and physical properties shown in Table 2 below was used and that the type and amount of carbon source gas were changed to adjust the content of each component and the physical properties of the composite.

**<Comparative Example 1>**

A negative electrode active material and a secondary battery using the same were prepared in the same manner as in Example 1, except that the etching process of step (1) using an etching solution in Example 1 was not carried out.

**<Comparative Example 2>**

A negative electrode active material and a secondary battery using the same were prepared in the same manner as in Example 1, except that NaOH was used instead of the HF etching solution and that etching was carried out for 12 hours at room temperature.

**<Comparative Example 3>**

A porous silicon-carbon composite was prepared and a secondary battery using the same was manufactured in the same manner as in Example 1, except that 35 ml of an aqueous solution of 40% by weight of HF was used as an etching solution.

**Test Example**

**<Test Example 1> Electron microscope analysis**

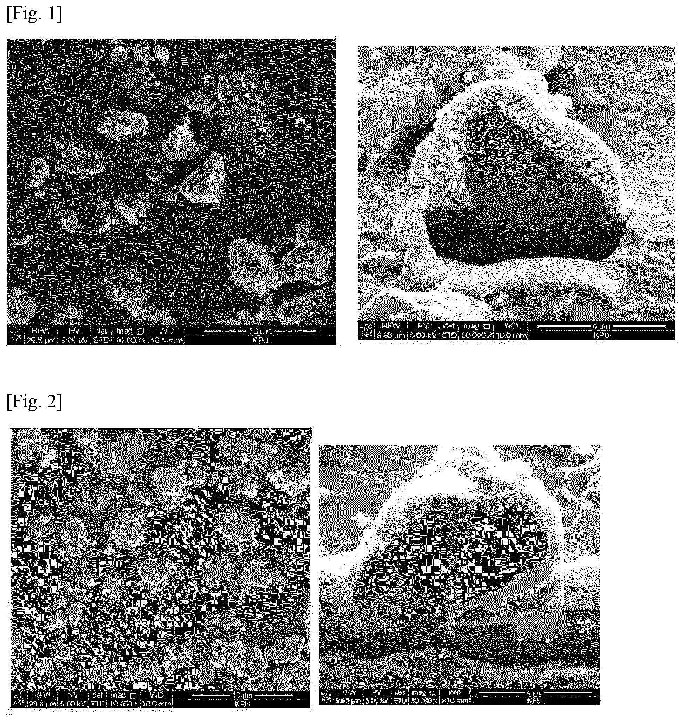

Figs. 1 and 2 show ion beam scanning electron microscope (FIB-SEM, [FC-FI20]-FIB II instrument) photographs of the porous silicon structure (B 1) and the porous silicon-carbon composite (C1) prepared in Example 1, respectively.

That is, Figs. 1 and 2 show photographs of the porous silicon structure (B1) and the porous silicon-carbon composite (C1) in a magnification of 10,000 and 30,000 as analyzed by an ion beam scanning electron microscope (FIB-SEM), respectively.

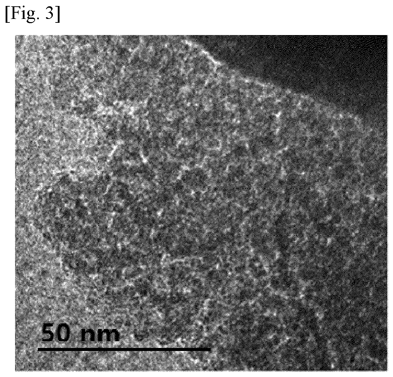

In addition, Fig. 3 shows a TEM photograph of the surface of the porous silicon-carbon composite (C5) prepared in Example 5. Here, the white bright dots indicate Si crystals, and the dark dots indicate carbon (C). As can be seen from Fig. 3, the surface of the porous silicon-carbon composite (C5) particles had a large amount of carbon, and the inside of the particles had a large amount of Si component.

**<Test Example 2> X-ray diffraction analysis**

The crystal structures of the porous silicon-carbon composite prepared in the Examples were analyzed with an X-ray diffraction analyzer (Malvern Panalytical, X'Pert3).

Specifically, the applied voltage was 40 kV and the applied current was 40 mA. The range of $2\theta$ was 10° to 80°, and the measurement was carried out by scanning at an interval of 0.05°.

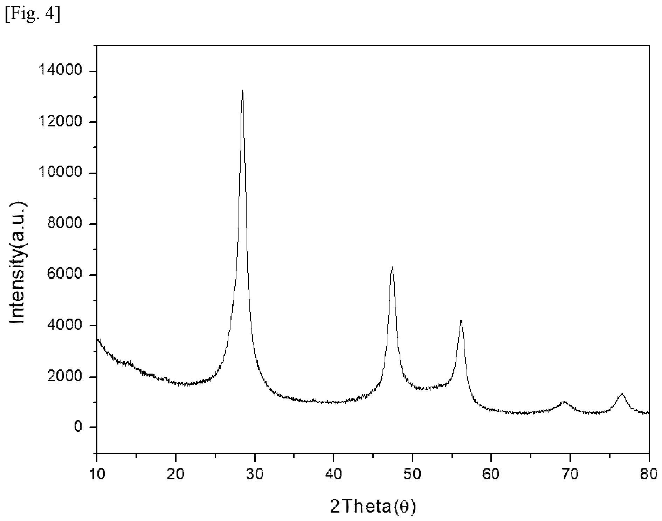

Fig. 4 shows the measurement results of an X-ray diffraction analysis of the porous silicon-carbon composite (C1) of Example 1.

Referring to Fig. 4, as can be seen from the X-ray diffraction pattern, the porous silicon-carbon composite (composite C1) of Example 1 had peaks corresponding to Si crystals around diffraction angles ($2\theta$) of 28.1°, 47.0°, 55.9°, 68.6°, and 76.1°. In addition, the diffraction angle ($2\theta$) of carbon could not be confirmed since it overlapped with the Si (111) peak.

**<Test Example 3> Analysis of the content and specific gravity of the component elements of the porous silicon structure or the porous silicon-carbon composite**

The content of each component element of oxygen (O) and carbon (C) in the porous silicon structure or the porous silicon-carbon composite prepared in the Examples and Comparative Examples were analyzed.

The contents of oxygen (O) and carbon (C) were analyzed by an elemental analyzer, respectively. The content of silicon (Si) was a value calculated based on the content of oxygen (O).

**<Test Example 4> Measurement of the average particle diameter of the porous silicon structure or the porous silicon-carbon composite**

The average particle diameter ($D_{50}$) of the composite particles prepared in the Examples and Comparative Examples was measured as a diameter average value $D_{50}$, i.e., a particle size or median diameter when the cumulative volume is 50% in particle size distribution measurement according to a laser beam diffraction method.

**<Test Example 5> Raman spectroscopic analysis**

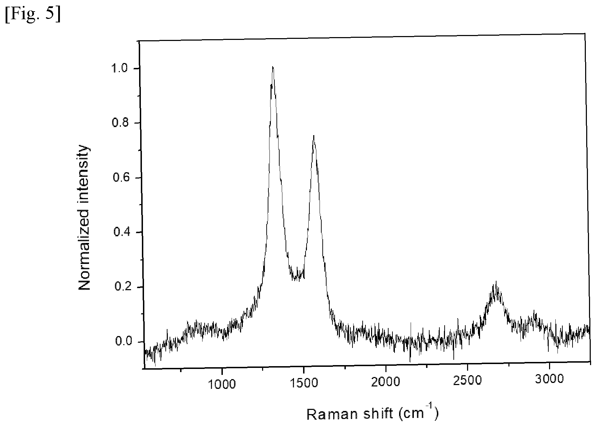

The porous silicon-carbon composite prepared in Example 1 was subjected to a Raman spectroscopic analysis. Raman analysis was carried out using a micro Raman analyzer (Renishaw, RM1000-In Via) at 2.41 eV (514 nm). The results are shown in Fig. 5.

Referring to Fig. 5, the Raman spectrum obtained by Raman spectroscopy had a 2D band peak in the range of 2,600 cm$^{-1}$ to 2,760 cm$^{-1}$, a G band peak in the range of 1,500 cm$^{-1}$ to 1,660 cm$^{-1}$, and a D band peak in the range of 1,300 cm$^{-1}$ to 1,460 cm$^{-1}$. When the intensity of the 2D band peak is $I_{2D}$, the intensity of the D band peak is $I_D$, and the intensity of the G band peak is $I_G$, $I_D$, $I_{2D}$, and $I_G$ were 1.0, 0.20, and 0.75, respectively, and $(I_{2D} + I_G)/I_D$ was 0.95.

It can be seen from the results of Raman spectroscopic analysis that the carbon layer had $I_D$, $I_{2D}$, and $I_G$ of the above values, so that the conductivity was good and the characteristics of the secondary battery could be enhanced. In particular, as $(I_{2D} + I_G)/I_D$ was 0.95, it was possible to suppress side reactions during charging and discharging and to suppress a deterioration in the initial efficiency.

Accordingly, the porous silicon-carbon composite prepared in Example 1 was excellent in conductivity, and the performance of the lithium secondary battery could be remarkably enhanced.

**<Test Example 6> Measurement of capacity, initial efficiency, and capacity retention rate of secondary batteries**

The coin cells (secondary batteries) prepared in the Examples and Comparative Examples were each charged at a constant current of 0.1 C until the voltage reached 0.005 V and discharged at a constant current of 0.1 C until the voltage reached 2.0 V to measure the charge capacity (mAh /g), discharge capacity (mAh/g), and initial efficiency (%). The results are shown in Table 4 below.

[Equation 2]

Initial efficiency (%) = discharge capacity/charge capacity $\times$ 100

In addition, the coin cells prepared in the Examples and Comparative Examples were each charged and discharged once in the same manner as above and, from the second cycle, charged at a constant current of 0.5 C until the voltage reached 0.005 V and discharged at a constant current of 0.5 C until the voltage reached 2.0 V to measure the cycle characteristics (capacity retention rate for 50 cycles, %). The results are shown in Table 4 below.

[Equation 3]

Capacity retention rate for 50 cycles (%) = 51$^{st}$ discharge capacity/2$^{nd}$ discharge capacity $\times$ 100

The content of each element and physical properties of the silicon-based raw material powder, the porous silicon structure, or the porous silicon-carbon composite of the Examples and Comparative Examples are summarized in Tables 1 to 3 below. The characteristics of the secondary batteries using the same are summarized in Table 4 below.

[Table 1]

| | | Example | | | | | Comparative Example | | |
|---|---|---|---|---|---|---|---|---|---|
| | | 1 | 2 | 3 | 4 | 5 | 1 | 2 | 3 |
| Silicon-based raw material powder (A) | Name | A1 | | | | | A1 | | |
| | O content (% by weight) | 35.5 | | | | | 35.5 | | |
| | $D_{50}$ ($\mu$m) | 5.1 | | | | | 5.1 | | |
| | Particle density (g/cm$^3$) | 2.32 | | | | | 2.32 | | |
| | BET (m$^2$/g) | 5.8 | | | | | 5.8 | | |

[Table 2]

| | | Example | | | | | Comparative Example | | |
|---|---|---|---|---|---|---|---|---|---|
| | | 1 | 2 | 3 | 4 | 5 | 1 | 2 | 3 |
| Porous | Name | B1 | | B2 | | B3 | - | B4 | B5 |
| silicon structure (B) | Oxygen reduction rate (%) | 96 | 98 | 90 | | - | - | | |
| | O content (% by weight) | 1.52 | 0.7 | 10.7 | | 36.4 | 17.8 | | |
| | Si content (% by weight) | 98.48 | 99.3 | 89.3 | | 63.6 | 82.2 | | |
| | O/Si molar ratio | 0.03 | 0.01 | 0.2 | | 1.00 | 0.37 | | |
| | Si (220) (nm) | 1.9 | 1.9 | 1.9 | | 1.9 | 1.9 | | |
| | Particle density (g/cm$^3$) | 1.76 | 1.69 | 1.81 | | 2.31 | 1.91 | | |
| | BET (m$^2$/g) | 1,182.6 | 812.5 | 891.4 | | 19.0 | 721 | | |
| | $D_{50}$ ($\mu$m) | 4.9 | 4.9 | 5.0 | | 4.8 | 4.9 | | |
| | Pore volume (cm$^3$/g) | 0.7539 | 0.6509 | 0.5825 | | 0.045 | 0.4581 | | |
| | Micropore (cm$^3$/g) | 0.396 | 0.2702 | 0.263 | | 0 | 0.1942 | | |
| | Mesopore (cm$^3$/g) | 0.3388 | 0.3595 | 0.3035 | | 0.003 | 0.2434 | | |
| | Macropore (cm$^3$/g) | 0.0191 | 0.0212 | 0.016 | | 0.042 | 0.0205 | | |

[Table 3]

| | | | Example | | | | | Comparative Example | | |
|---|---|---|---|---|---|---|---|---|---|---|
| | | | 1 | 2 | 3 | 4 | 5 | 1 | 2 | 3 |
| Porous silicon-carbon composite (C) | | Name | C1 | C2 | C3 | C4 | C5 | C6 | C7 | C8 |
| | | C content (% by weight) | 31.2 | 36.3 | 33.9 | 37.1 | 25 | 6.7 | 7.1 | 22 |
| | | Si content (% by weight) | 67.11 | 61.96 | 64.6 | 61.18 | 63.5 | 58.78 | 56.39 | 62.6 |
| | | O content (% by weight) | 1.69 | 1.74 | 1.5 | 1.72 | 11.5 | 34.52 | 36.51 | 13.6 |
| | | O/Si molar ratio | 0.04 | 0.05 | 0.04 | 0.05 | 0.32 | 1.03 | 1.13 | 0.38 |
| | | Si (220) (nm) | 7.3 | 6.9 | 7.2 | 6.7 | 6.8 | 6.4 | 6.1 | 6.8 |
| | | Particle density (g/cm$^3$) | 2.13 | 2.19 | 2.21 | 2.23 | 2.20 | 2.35 | 2.28 | 2.24 |
| | | $D_{50}$ ($\mu$m) | 5.1 | 5.5 | 5.6 | 5.7 | 5.4 | 5.4 | 6.3 | 5.6 |
| | | BET (m$^2$/g) | 13.7 | 4.6 | 5.3 | 4.1 | 38 | 15.2 | 9.3 | 26 |

[Table 4]

| | | Example | | | | | Comparative Example | | |
|---|---|---|---|---|---|---|---|---|---|
| | | 1 | 2 | 3 | 4 | 5 | 1 | 2 | 3 |
| Characteristics of secondary battery | Discharge capacity (mAh/g) | 2,032 | 1,870 | 1,915 | 1,855 | 1,815 | 1,720 | 1,640 | 1,795 |
| | Initial efficiency (%) | 87.9 | 87.2 | 86.9 | 86.3 | 82.0 | 75 | 74.1 | 80.4 |
| | Capacity retention rate after 50 cycles (%) | 82.7 | 85.4 | 84.6 | 85.1 | 85.4 | 85.1 | 83.7 | 84.6 |

As can be seen from Table 4, in the porous silicon structures and porous silicon-carbon composites of Examples 1 to 5 of the present invention, the molar ratio (O/Si) of oxygen (O) atoms to silicon (Si) atoms satisfies a specific range. Thus, the secondary batteries prepared using the same were significantly enhanced in performance in terms of discharge capacity, initial efficiency, and capacity retention rate as compared with the secondary batteries of Comparative Examples 1 to 3.

Specifically, the secondary batteries of Examples 1 to 5 using the porous silicon structure having a molar ratio (O/Si) of oxygen (O) atoms to silicon (Si) atoms of 0.01 to 0.2 had a discharge capacity of 1,815 mAh/g to 2,032 mAh/g, an initial efficiency of 82.0% to 87.9%, and a capacity retention rate of 82.7% to 85.4%, indicating that the performance of the secondary batteries was overall excellent.

Meanwhile, when the secondary battery of Example 1, the secondary battery of Comparative Example 1 in which the etching was not carried out in the process of Example 1, and the secondary battery of Comparative Example 2 in which the etching was carried out using NaOH instead of HF in the process of Example 1 are compared, the secondary battery of Example 1 had a discharge capacity of 2,032 mAh/g and an initial efficiency of 87.9%, whereas the secondary batteries of Comparative Examples 1 and 2 had a discharge capacity of 1,720 mAh/g and 1,640 mAh/g and an initial efficiency of 75% and 74.1%, respectively, indicating that the secondary batteries of Comparative Examples 1 and 2 were significantly reduced in the discharge capacity and initial efficiency as compared with the secondary battery of Example 1.

In addition, when the secondary battery of Example 1 and the secondary battery of Comparative Example 3 in which the molar ratio (O/Si) of oxygen (O) atoms to silicon (Si) atoms was 0.38 are compared, the secondary battery of Comparative Example 3 had a discharge capacity of 1,795 mAh/g and an initial efficiency of 80.4%, indicating that its performance was significantly reduced as compared with the secondary battery of Example 1 having a discharge capacity of 2,032 mAh/g and an initial efficiency of 87.9%.

Accordingly, it is confirmed that the performance of a secondary battery can be enhanced by adjusting the molar ratio (O/Si) of oxygen (O) atoms to silicon (Si) atoms in the porous silicon structure.

**Claims**

1. A porous silicon structure, which comprises silicon particles, wherein the molar ratio (O/Si) of oxygen (O) atoms to silicon (Si) atoms in the porous silicon structure is 0.01 to 0.35.

2. The porous silicon structure of claim 1, wherein the porous silicon structure comprises a silicon aggregate in which the silicon particles are interconnected with each other.

3. The porous silicon structure of claim 1, wherein the silicon particles have a crystallite size of 1 nm to 20 nm in an X-ray diffraction analysis.

4. The porous silicon structure of claim 1, which further comprises a silicon oxide ($SiO_x$, $0.1 < x \leq 2$) formed on the surface of the silicon particles.

5. The porous silicon structure of claim 4, wherein the content of oxygen (O) in the porous silicon structure is 0.1% by weight to 15% by weight based on the total weight of the porous silicon structure.

6. The porous silicon structure of claim 1, wherein the porous silicon structure has an average particle diameter ($D_{50}$) of 1 $\mu$m to 15 $\mu$m and a specific gravity of 1.5 $g/cm^3$ to 2.3 $g/cm^3$.

7. The porous silicon structure of claim 1, wherein the porous silicon structure comprises pores inside thereof, when the surface of the porous silicon structure is measured by a gas adsorption method (BET plot method), it comprises micropores of 2 nm or less in a pore volume of 0.1 $cm^3/g$ to 0.5 $cm^3/g$ and mesopores of greater than 2 nm to 50 nm in a pore volume of 0.2 $cm^3/g$ to 0.7 $cm^3/g$, and the porous silicon structure has a specific surface area (Brunauer-Emmett-Teller method; BET) of 100 $m^2/g$ to 1,600 $m^2/g$.

8. A porous silicon-carbon composite, which comprises the porous silicon structure of claim 1 and carbon.

9. The porous silicon-carbon composite of claim 8, wherein the molar ratio (O/Si) of oxygen (O) atoms to silicon (Si) atoms in the porous silicon-carbon composite is 0.01 to 0.35.

10. The porous silicon-carbon composite of claim 8, wherein the porous silicon-carbon composite comprises pores inside thereof, and the porosity of the porous silicon-carbon composite is 0.5% by volume to 40% by volume based on the volume of the porous silicon-carbon composite.

11. The porous silicon-carbon composite of claim 8, wherein the content of silicon (Si) is 30% by weight to 90% by weight based on the total weight of the porous silicon-carbon composite.

12. The porous silicon-carbon composite of claim 8, wherein the carbon is present on the surface of the silicon particle, the carbon serves as a matrix, the silicon particles and the pores being dispersed in the carbon matrix, or the carbon is present in both ways.

13. The porous silicon-carbon composite of claim 12, wherein the carbon further forms a carbon layer on the surface of the porous silicon structure.

14. The porous silicon-carbon composite of claim 13, wherein the carbon layer comprises at least one selected from the group consisting of graphene, reduced graphene oxide, a carbon nanotube, a carbon nanofiber, and graphite.

15. The porous silicon-carbon composite of claim 13, wherein the content of carbon (C) is 10% by weight to 90% by weight based on the total weight of the porous silicon-carbon composite.

16. The porous silicon-carbon composite of claim 14, wherein the carbon layer has a thickness of 1 nm to 300 nm.

17. The porous silicon-carbon composite of claim 8, wherein the porous silicon-carbon composite has an average particle diameter ($D_{50}$) of 2 μm to 15 μm.

18. The porous silicon-carbon composite of claim 8, wherein the porous silicon-carbon composite has a specific gravity of 1.8 g/cm$^3$ to 2.5 g/cm$^3$ and a specific surface area (Brunauer-Emmett-Teller method; BET) of 3 m$^2$/g to 50 m$^2$/g.

19. A process for preparing the porous silicon structure of claim 1, which comprises:

a first step of etching a silicon-based raw material powder using an etching solution containing a fluorine (F) atom-containing compound; and
a second step of filtering and drying the product obtained by the etching to prepare a porous silicon structure.

20. A process for preparing the porous silicon-carbon composite of claim 8, which comprises:

a first step of etching a silicon-based raw material powder using an etching solution containing a fluorine (F) atom-containing compound;
a second step of filtering and drying the product obtained by the etching to prepare a porous silicon structure; and
a third step of forming a carbon layer on the surface of the porous silicon structure by using a chemical thermal decomposition deposition method to prepare the porous silicon-carbon composite.

21. The process for preparing the silicon-carbon composite according to claim 20, wherein, in the first step, the etching solution further comprises one or more acids selected from the group consisting of organic acids, sulfuric acid, hydrochloric acid, phosphoric acid, nitric acid, and chromic acid.

22. The process for preparing the silicon-carbon composite according to claim 20, which further comprises, after the third step, pulverizing or crushing and classifying the porous silicon-carbon composite such that the porous silicon-carbon composite has an average particle diameter of 2 μm to 15 μm.

23. The process for preparing the silicon-carbon composite according to claim 20, wherein the formation of the carbon layer in the third step is carried out by injecting at least one selected from a compound represented by the following Formulae 1 to 3 and carrying out a reaction in a gaseous state at 400°C to 1,200°C:

[Formula 1]       $C_N H_{(2N+2-A)}[OH]_A$

in Formula 1, N is an integer of 1 to 20, and A is 0 or 1,

[Formula 2]       $C_N H_{(2N-B)}$

in Formula 2, N is an integer of 2 to 6, and B is an integer of 0 to 2,

[Formula 3]       $C_x H_y O_z$

in Formula 3, x is an integer of 1 to 20, y is an integer of 0 to 25, and z is an integer of 0 to 5.

24. A negative electrode active material for a lithium secondary battery, which comprises the porous silicon-carbon composite of claim 8.

25. The negative electrode active material for a lithium secondary battery of claim 24, wherein the negative electrode active material further comprises a carbon-based negative electrode material.

26. The negative electrode active material for a lithium secondary battery of claim 25, wherein the content of the carbon-based negative electrode material is 5% by weight to 95% by weight based on the total weight of the negative electrode active material.

27. A lithium secondary battery, which comprises the negative electrode active material for a lithium secondary battery of claim 24.

[Fig. 1]

[Fig. 2]

[Fig. 3]

[Fig. 4]

[Fig. 5]

## INTERNATIONAL SEARCH REPORT

| | International application No. |
|---|---|
| | **PCT/KR2021/018267** |

| | |
|---|---|
| **A.** | **CLASSIFICATION OF SUBJECT MATTER** |
| | C01B 33/18(2006.01)i; H01M 4/36(2006.01)i; H01M 4/38(2006.01)i; H01M 4/62(2006.01)i; H01M 4/587(2010.01)i; H01M 10/052(2010.01)i |
| | According to International Patent Classification (IPC) or to both national classification and IPC |

| | |
|---|---|
| **B.** | **FIELDS SEARCHED** |
| | Minimum documentation searched (classification system followed by classification symbols) |
| | C01B 33/18(2006.01); C01B 33/02(2006.01); H01M 10/052(2010.01); H01M 10/0525(2010.01); H01M 4/13(2010.01); H01M 4/134(2010.01); H01M 4/38(2006.01); H01M 4/48(2010.01); H01M 4/62(2006.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 다공성 규소 구조체(porous silicon structure), 탄소층(carbon layer), 몰비(mole ratio), 에칭(etching) |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-1981609 B1 (LG CHEM, LTD.) 24 May 2019 (2019-05-24)<br>See claims 1, 9, 20 and 21; paragraphs [0043], [0047], [0048], [0050], [0052], [0055]-[0057], [0062]-[0064], [0066], [0067], [0071], [0076], [0077], [0089], [0093], [0096] and [0128]; and example 1. | 1-18,24-27 |
| Y | | 19-23 |
| Y | KR 10-2014-0056069 A (LG CHEM, LTD.) 09 May 2014 (2014-05-09)<br>See claims 12 and 20; and paragraphs [0039], [0044], [0065] and [0091]. | 19-23 |
| A | KR 10-2017-0090449 A (CORNING INCORPORATED) 07 August 2017 (2017-08-07)<br>See claims 1, 5, 6, 8, 10, 12, 16, 19, 24 and 38; and paragraphs [0010], [0012], [0014], [0044]-[0046], [0061] and [0078]-[0080]. | 1-27 |
| A | WO 2012-036265 A1 (FURUKAWA ELECTRIC CO., LTD.) 22 March 2012 (2012-03-22)<br>See claims 1, 4, 6 and 9. | 1-27 |

| | |
|---|---|
| ✓ Further documents are listed in the continuation of Box C. | ✓ See patent family annex. |

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 March 2022** | **10 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/018267** |

**C.    DOCUMENTS CONSIDERED TO BE RELEVANT**

| Category* | Citation of document, with indication, where appropriate, of the relevant passages | Relevant to claim No. |
|---|---|---|
| A | US 2016-0372753 A1 (KABUSHIKI KAISHA TOSHIBA) 22 December 2016 (2016-12-22)<br>See entire document. | 1-27 |

Form PCT/ISA/210 (second sheet) (July 2019)

**INTERNATIONAL SEARCH REPORT**
Information on patent family members

International application No.

**PCT/KR2021/018267**

| Patent document cited in search report | | | Publication date (day/month/year) | Patent family member(s) | | | Publication date (day/month/year) |
|---|---|---|---|---|---|---|---|
| KR | 10-1981609 | B1 | 24 May 2019 | CN | 107636867 | A | 26 January 2018 |
| | | | | CN | 107636867 | B | 02 April 2021 |
| | | | | EP | 3355389 | A1 | 01 August 2018 |
| | | | | EP | 3355389 | B1 | 30 December 2020 |
| | | | | JP | 2018-523898 | A | 23 August 2018 |
| | | | | JP | 6727667 | B2 | 22 July 2020 |
| | | | | KR | 10-2017-0036381 | A | 03 April 2017 |
| | | | | PL | 3355389 | T3 | 17 May 2021 |
| | | | | US | 2018-0151874 | A1 | 31 May 2018 |
| | | | | WO | 2017-052281 | A1 | 30 March 2017 |
| KR | 10-2014-0056069 | A | 09 May 2014 | CN | 103931027 | A | 16 July 2014 |
| | | | | CN | 103931027 | B | 07 December 2016 |
| | | | | EP | 2897200 | A1 | 22 July 2015 |
| | | | | EP | 2897200 | B1 | 25 July 2018 |
| | | | | JP | 2015-520725 | A | 23 July 2015 |
| | | | | JP | 5927710 | B2 | 01 June 2016 |
| | | | | US | 2014-0141334 | A1 | 22 May 2014 |
| | | | | US | 9548493 | B2 | 17 January 2017 |
| | | | | WO | 2014-069902 | A1 | 08 May 2014 |
| KR | 10-2017-0090449 | A | 07 August 2017 | AU | 2011-293715 | A1 | 31 January 2013 |
| | | | | CN | 103069055 | A | 24 April 2013 |
| | | | | CN | 103069055 | B | 03 August 2016 |
| | | | | CN | 104271505 | A | 07 January 2015 |
| | | | | CN | 106103344 | A | 09 November 2016 |
| | | | | CN | 106463702 | A | 22 February 2017 |
| | | | | CN | 106463702 | B | 21 February 2020 |
| | | | | CN | 107004830 | A | 01 August 2017 |
| | | | | CN | 107004830 | B | 28 April 2020 |
| | | | | CN | 108290740 | A | 17 July 2018 |
| | | | | EP | 2609234 | A2 | 03 July 2013 |
| | | | | EP | 2609234 | A4 | 04 November 2015 |
| | | | | EP | 2791058 | A1 | 22 October 2014 |
| | | | | EP | 2819949 | A1 | 07 January 2015 |
| | | | | EP | 3130023 | A1 | 15 February 2017 |
| | | | | EP | 3224881 | A1 | 04 October 2017 |
| | | | | EP | 3380436 | A1 | 03 October 2018 |
| | | | | JP | 2013-536151 | A | 19 September 2013 |
| | | | | JP | 2015-500787 | A | 08 January 2015 |
| | | | | JP | 2015-514660 | A | 21 May 2015 |
| | | | | JP | 2017-514273 | A | 01 June 2017 |
| | | | | JP | 2017-536676 | A | 07 December 2017 |
| | | | | JP | 5878535 | B2 | 08 March 2016 |
| | | | | JP | 6251685 | B2 | 20 December 2017 |
| | | | | KR | 10-2013-0108531 | A | 04 October 2013 |
| | | | | KR | 10-2014-0131566 | A | 13 November 2014 |
| | | | | KR | 10-2016-0142863 | A | 13 December 2016 |
| | | | | KR | 10-2018-0087340 | A | 01 August 2018 |
| | | | | TW | 201217290 | A | 01 May 2012 |
| | | | | TW | 201633586 | A | 16 September 2016 |
| | | | | TW | I560163 | B | 01 December 2016 |

Form PCT/ISA/210 (patent family annex) (July 2019)

**INTERNATIONAL SEARCH REPORT**
Information on patent family members

International application No.

**PCT/KR2021/018267**

| Patent document cited in search report | | | Publication date (day/month/year) | Patent family member(s) | | | Publication date (day/month/year) |
|---|---|---|---|---|---|---|---|
| | | | | US | 10439206 | B2 | 08 October 2019 |
| | | | | US | 10629900 | B2 | 21 April 2020 |
| | | | | US | 2012-0052656 | A1 | 01 March 2012 |
| | | | | US | 2013-0149549 | A1 | 13 June 2013 |
| | | | | US | 2013-0209781 | A1 | 15 August 2013 |
| | | | | US | 2013-0220211 | A1 | 29 August 2013 |
| | | | | US | 2015-0291470 | A1 | 15 October 2015 |
| | | | | US | 2017-0033353 | A1 | 02 February 2017 |
| | | | | US | 2017-0149059 | A1 | 25 May 2017 |
| | | | | US | 2017-0271651 | A1 | 21 September 2017 |
| | | | | US | 2020-0220170 | A1 | 09 July 2020 |
| | | | | US | 8415555 | B2 | 09 April 2013 |
| | | | | US | 9917299 | B2 | 13 March 2018 |
| | | | | WO | 2012-027121 | A2 | 01 March 2012 |
| | | | | WO | 2012-027121 | A3 | 09 August 2012 |
| | | | | WO | 2013-090153 | A1 | 20 June 2013 |
| | | | | WO | 2013-130696 | A1 | 06 September 2013 |
| | | | | WO | 2015-157538 | A1 | 15 October 2015 |
| | | | | WO | 2016-085953 | A1 | 02 June 2016 |
| | | | | WO | 2017-091543 | A1 | 01 June 2017 |
| WO | 2012-036265 | A1 | 22 March 2012 | CN | 103118976 | A | 22 May 2013 |
| | | | | CN | 103118976 | B | 06 July 2016 |
| | | | | JP | 2012-082125 | A | 26 April 2012 |
| | | | | JP | 2012-082126 | A | 26 April 2012 |
| | | | | JP | 5598861 | B2 | 01 October 2014 |
| | | | | JP | 5877025 | B2 | 02 March 2016 |
| | | | | KR | 10-1920942 | B1 | 21 November 2018 |
| | | | | KR | 10-2013-0105626 | A | 25 September 2013 |
| | | | | TW | 201217267 | A | 01 May 2012 |
| | | | | TW | I503277 | B | 11 October 2015 |
| | | | | US | 2013-0196158 | A1 | 01 August 2013 |
| | | | | US | 8980428 | B2 | 17 March 2015 |
| US | 2016-0372753 | A1 | 22 December 2016 | JP | 6430489 | B2 | 28 November 2018 |
| | | | | US | 10511026 | B2 | 17 December 2019 |
| | | | | WO | 2015-145521 | A1 | 01 October 2015 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4393610 B

- JP 2016502253 A